# EUROPEAN PATENT APPLICATION

(11) **EP 2 985 502 A1**
(43) Date of publication of application: **17.02.2016**
(21) Application number: 14782833.9
(22) Date of filing: 05.03.2014
(51) Int. Cl.: F16L 11/133, B63B 27/24, F16L 11/12

(54) **MARINE HOSE AND MARINE-HOSE AIRBAG DEVICE**

(30) Priority: 09.04.2013 JP 2013080902
(71) Applicant: The Yokohama Rubber Co., Ltd., Minato-ku Tokyo 105-8685 (JP)
(72) Inventor: ONO, Shunichi, Hiratsuka-shi Kanagawa 254-8601 (JP)
(74) Representative: Dilg, Haeusler, Schindelmann Patentanwaltsgesellschaft mbH
(86) International application number: PCT/JP2014/055637
(87) International publication number: WO 2014/167922

(57) **Abstract**

Provided are a marine hose and an airbag device for a marine hose able to prevent sinking of a marine hose line to the bottom of a body of water due to a decrease over time in buoyancy, while preventing an increase in diameter and decrease in flexibility of a main hose body.

An airbag device 8 including a water pressure sensor 9, a folded bag float 10 attached to the outer surface of the marine hose 1, and an inflation device 11 for introducing air into the bag float 10, is used, wherein the water pressure sensor 9 activates the inflation device 11 to inflate the folded bag float 10 when the water pressure sensor 9 detects that a preset water pressure value has been reached, the buoyancy provided by the inflated bag float 10 preventing further sinking of the marine hose 1.

## Description

### TECHNICAL FIELD

The present invention relates to a marine hose and an airbag device for a marine hose, and more specifically, relates to a marine hose and an airbag device for a marine hose able to prevent sinking of a marine hose line to the bottom of a body of water as a result of a decrease over time in buoyancy while avoiding an increase in diameter in a main hose body.

### BACKGROUND

Among marine hoses for transporting crude oil or the like between a tanker at sea and an onshore facility is a floating-type marine hose provided with a buoyant layer made of a buoyant material such as a sponge (see patent document 1, for example). This buoyant material undergoes a decrease in buoyancy by being crushed over time due to an external force on the marine hose such as water pressure or bends. If the buoyancy of the buoyant material decreases, then the marine hose sinks even further, causing it to be even more crushed, and consequently resulting in buoyancy continuing to decrease. Once the marine hose sinks to a certain depth, it undergoes so-called auto-submerging in which the marine hose loses all buoyancy enabling it to float. Once auto-submerging occurs, a marine hose line constituted of a plurality of such marine hoses connected together sinks to the bottom of a body of water.

Conventionally, in order to prevent such sinking of the marine hose line, the marine hose line has been provided in advance with a large amount of buoyant material in anticipation of the decrease in buoyancy over time. However, the degree to which buoyancy decreases over time varies depending on the usage environment for the marine hose, and thus, an excessive amount of buoyant material has been provided in consideration of safety. Thus, the outer diameter of the main hose body has been made large, resulting in increasing difficulty in handling the marine hose. Also, the flexibility of the main hose body decreases as the diameter thereof increases, which also increases the difficulty in handling the marine hose.

### PRIOR ART DOCUMENT

### Patent Document

Patent Document 1: Japanese Unexamined Patent Application Publication No. 2009-275785A

### SUMMARY OF THE INVENTION

### Problem to be Solved by the Invention

An object of the present invention is to provide a marine hose and an airbag device for a marine hose able to prevent sinking of a marine hose line to the bottom of a body of water due to a decrease over time in buoyancy, while preventing an increase in diameter and decrease in flexibility of a main hose body.

### Means to Solve the Problem

A marine hose of the present invention for achieving the above-mentioned object comprises an airbag device. The airbag device comprises a water pressure sensor, a bag float attached in a folded state to an outer surface of the marine hose, and an inflation device that introduces air into the bag float. The water pressure sensor activates the inflation device to inflate the bag float in a folded state when the water pressure sensor detects that a preset water pressure value has been reached, thereby preventing sinking of the marine hose by buoyancy provided by the inflated bag float.

An airbag device for a marine hose of the present invention for achieving the above-mentioned object is an airbag device comprising: a water pressure sensor; a bag float attached in a folded state to an outer surface of the marine hose; and an inflation device that introduces air into the bag float. The water pressure sensor activates the inflation device to inflate the bag float in a folded state when the water pressure sensor detects that a preset water pressure value has been reached, thereby preventing sinking of the marine hose by buoyancy provided by the inflated bag float.

### EFFECT OF THE INVENTION

According to the marine hose of the present invention, an airbag device including a water pressure sensor, a bag float attached in a folded state to the outer surface of the marine hose, and an inflation device for introducing air into the bag float is used, and thus, it is possible to avoid an increase in diameter and a decrease in flexibility in the main hose body. When the water pressure sensor detects that the water pressure has reached a preset value, the inflation device is activated to inflate the folded bag float, and the buoyancy of the inflated bag float prevents the marine hose from sinking; thus, it is possible to reliably prevent the marine hose line from sinking to the bottom of a body of water as a result of a decrease over time in buoyancy, regardless of the usage environment of the marine hose.

The airbag device for the marine hose of the present invention can be attached to an existing marine hose. Thus, the effects described above attained by the marine hose of the present invention can also be provided for existing marine hoses.

### BRIEF DESCRIPTION OF THE DRAWINGS

FIG. 1 is a vertical cross-sectional view illustrating a portion of a marine hose of the present invention.
FIG. 2 is an explanatory drawing illustrating a marine hose line formed by connecting a plurality of marine hoses.
FIG. 3 is an explanatory drawing illustrating an airbag device.
FIG. 4 is an explanatory drawing illustrating a marine hose in which the bag float is inflated.
FIG. 5 is an explanatory drawing illustrating a modified example of the airbag device.
FIG. 6 is an explanatory drawing illustrating a marine hose in which the bag float illustrated in FIG. 5 is inflated.

### BEST MODE FOR CARRYING OUT THE INVENTION

A marine hose and an airbag device for a marine hose of the present invention will be described below on the basis of the embodiments illustrated in the drawings.

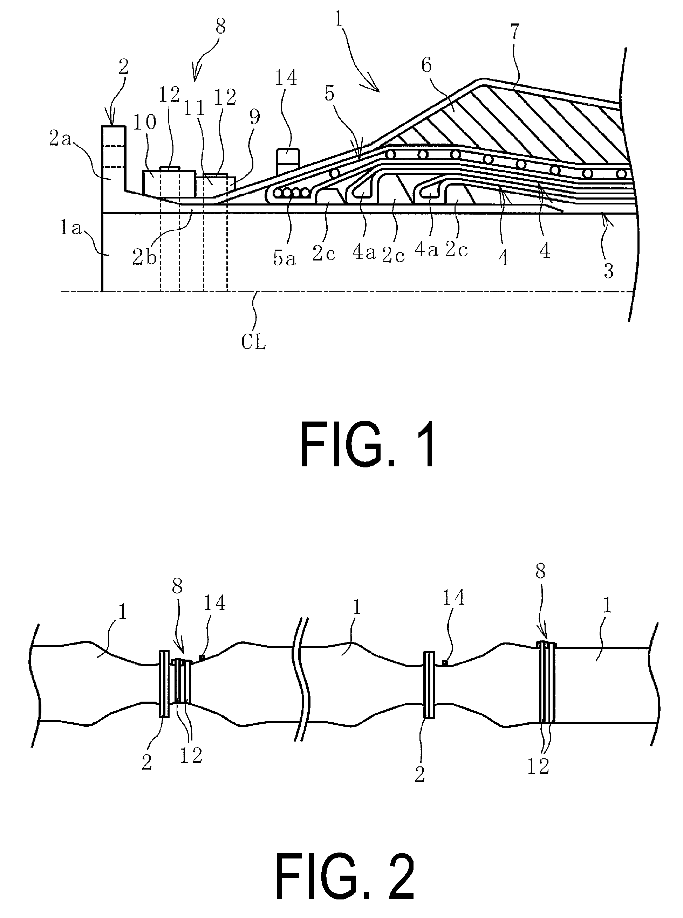

When a marine hose 1 of the present invention illustrated in FIGS. 1 and 2 is manufactured, it comes pre-equipped with an airbag device 8 for a marine hose (hereinafter referred to as the airbag device 8). The airbag device 8 of the present invention is installed afterwards on an existing marine hose.

The marine hose 1 includes connection fittings 2 to allow connection with other marine hoses 1 on both ends in the lengthwise direction, and the connection fitting 2 is constituted of a nipple 2b including a flange 2a on one end. As illustrated in FIG. 2, marine hoses 1 are connected to each other through the respective connection fittings 2 thereof, and a marine hose line is formed by a plurality of such connected marine hoses 1.

An inner surface rubber layer 3, a main reinforcing layer 4, and a main body wire layer 5 are wound around and layered in that order towards the outside on the outer periphery of the nipple 2b, and the outermost periphery is covered in a cover rubber layer 7. To the inside of the inner surface rubber layer 3 is a fluid flow path 1a. The line CL in FIG. 1 is a center line extending in the axial direction of the marine hose 1.

A buoyant layer 6 made of a buoyant material such as a sponge is provided between the main body wire layer 5 and the cover rubber layer 7. In other words, the present invention is applied to a floating type marine hose 1.

The inner surface rubber layer 3 in contact with the fluid being transported is made of acrylonitrile rubber or the like having excellent oil resistance, and the main body wire layer 5 is formed by winding a metal wire in a spiral at a prescribed spacing in a rubber layer on the outer periphery of the main reinforcing layer 4. The main reinforcing layer 4 is formed by layering a plurality of reinforcing cord layers, each of which is formed by coating reinforcing cords in rubber.

Nipple wires 4a and 5a on one end respectively of the main reinforcing layer 4 and the main body wire layer 5 are fixed to the nipple 2b by a fixing ring 2c or the like protruding from the outer peripheral surface of the nipple 2b. The cover rubber layer 7 is made of a non-water-permeable material such as rubber, and an easily visible line pattern or the like is formed on the surface thereof. The marine hose 1 is not limited to the structure illustrated in FIG. 1.

The airbag device 8 is attached to the outer peripheral side of the nipple 2b of the connection fitting 2, the flange 2a, or the main hose body (portions thereof other than the connection fitting 2), for example. There is no particular limitation on the number of airbag devices 8 attached to the marine hose 1; one or a plurality thereof can be provided.

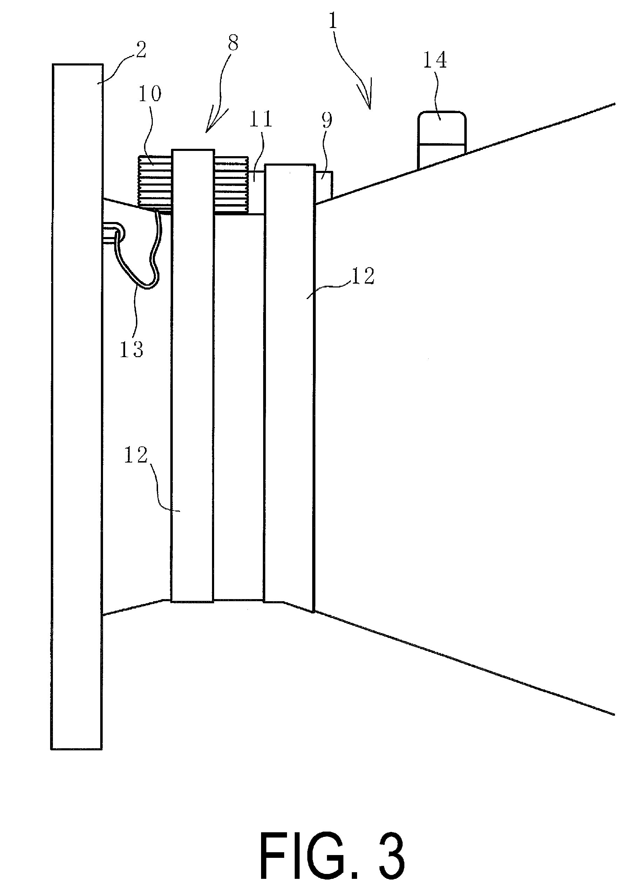

As illustrated in FIG. 3, the airbag device 8 includes a water pressure sensor 9, a bag float 10 attached to the outer surface of the marine hose 1 in a folded state, and an inflation device 11 to introduce air into the bag float 10. When the water pressure sensor 9 detects that the water pressure has reached a preset value, it causes the inflation device 11 to activate. The bag float 10 is made of rubber, for example, and is in a folded state by being folded into a compact form. The inflation device 11 includes an air cylinder containing pressurized air and a nozzle for blowing out pressurized air.

In the present embodiment, the folded bag float 10 is attached to the outer surface of the marine hose 1 (connection fitting 2 or main hose body) by a fitting 12 such as a fastening belt. The water pressure sensor 9 and the inflation device 11 are housed in a waterproof case, and are attached to the outer surface of the marine hose 1 by the fitting 12 such as a fastening belt, a bolt, or an adhesive.

Additionally, the bag float 10 is connected to the marine hose 1 by a cord 13. The cord 13 can be a steel cord rope, a steel chain, a resin rope, or the like.

Also provided is a warning device 14 that issues a warning when the water pressure sensor 9 detects that a preset water pressure value has been reached. The warning device 14 can be a light, a buzzer, or the like. Alternatively, it is possible to use a warning device 14 that transmits a warning signal to a receiver at a location away from the marine hose 1.

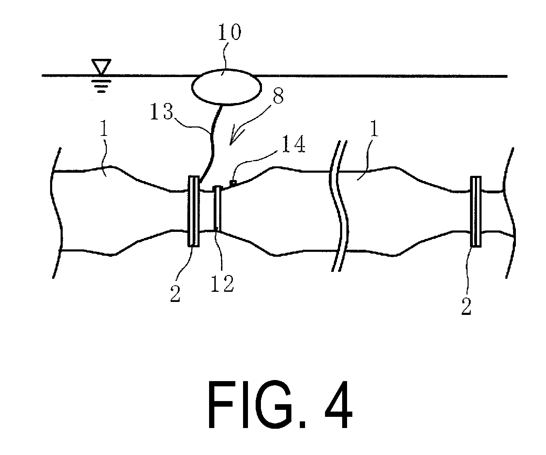

The buoyant material of the buoyant layer 6 is crushed over time, and the buoyancy of the buoyant layer 6 gradually decreases. As a result, when the marine hose 1 sinks to a depth at which water pressure reaches the preset value, then as illustrated in FIG. 4, the water pressure sensor 9 detects that the water pressure has reached this preset value, and the inflation device 11 is activated, causing pressurized air to flow from the air cylinder into the folded bag float 10 to inflate it. When the bag float 10 is inflated, the fitting 12 fixing the folded bag float 10 to the marine hose 1 is cut by this inflation pressure, for example.

The buoyancy provided by the inflated bag float 10 is applied to the marine hose 1, which is thereby prevented from sinking any further. In other words, the bag float 10 inflates and provides additional buoyancy to the marine hose 1 prior to auto-submerging occurring, and thus, it is possible to prevent the marine hose line from sinking to the bottom of a body of water. Thus, a water pressure at which auto-submerging does not occur is set as the preset water pressure at which the inflation device 11 is activated.

In the present embodiment, the inflated bag float 10 floats upward such that the surface thereof protrudes above the water surface while being connected to the marine hose 1 by the cord 13. Thus, by visually observing the surface of the bag float 10 above the water surface, it is possible to discern that the buoyant layer 6 is not providing sufficient buoyancy. If a warning device 14 is provided, then it is also possible to discern that the buoyant layer 6 is not providing sufficient buoyancy by the warning issued by the warning device 14.

The inflated bag float 10 provides additional buoyancy to the marine hose 1, and thus, it is possible to delay auto-submerging. Once it is discerned that the buoyant layer 6 is providing insufficient buoyancy, then measures such as replacing the marine hose 1 are taken.

The airbag device 8 is constituted of the water pressure sensor 9, the folded bag float 10, and the inflation device 11 for introducing air into the bag float 10, thus providing a compact configuration that does not take up a lot of space. Compactness can be maintained even when a warning device 14 is provided. Thus, it is possible to prevent an increase in diameter of the main hose body and prevent a decrease in ease of handling. By preventing an increase in diameter in the main hose body, it is possible to prevent a decrease in flexibility in the main hose body (marine hose 1), which also prevents a decrease in ease of handling.

When the water pressure sensor 9 detects that the preset water pressure value has been reached, the bag float 10 is inflated, providing additional buoyancy to the marine hose 1, and thus, it is possible to reliably prevent the marine hose line from sinking to the bottom of a body of water as a result of a decrease over time in buoyancy of the buoyant layer 6 regardless of the usage environment of the marine hose 1.

The airbag device 8 of the present invention can be attached afterwards to an existing marine hose, and thus, effects attained by the marine hose 1 of the present invention can also be provided to existing marine hoses.

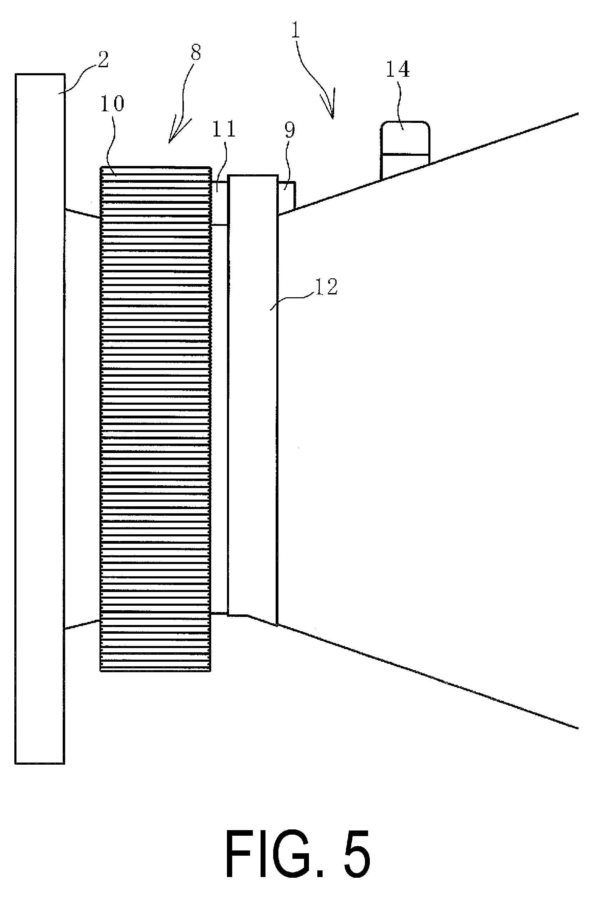

As illustrated in FIG. 5, it is possible to attach the folded bag float 10 to the outer surface of the marine hose 1 by a fitting such as a bolt or an adhesive, for example, without the use of the cord 13. In this embodiment, the bag float 10, which forms a ring shape when inflated, is connected to the marine hose 1.

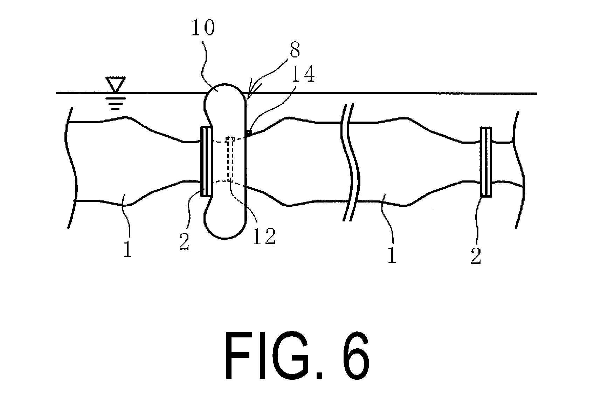

Once the marine hose 1 sinks to a depth at which the preset water pressure value is reached, then as illustrated in FIG. 6, the water pressure sensor 9 detects that the preset water pressure value has been reached, activating the inflation device 11 and sending pressurized air from the air cylinder to the folded bag float 10, thereby inflating it. As a result of the buoyancy provided by the inflated bag float 10 fitted to the outside of the marine hose 1, additional buoyancy is provided to the marine hose 1, thereby preventing further sinking. As a result, it is possible to prevent the marine hose line from sinking to the bottom of a body of water.

### Reference Numerals

1 Marine hose
1a Fluid flow path
2 Connection fitting
2a Flange
2b Nipple
2c Fixing ring
3 Inner surface rubber layer
4 Main reinforcing layer
4a Nipple wire
5 Main body wire layer
5a Nipple wire
6 Buoyant layer
7 Cover rubber layer
8 Airbag device
9 Water pressure sensor
10 Bag float
11 Inflation device
12 Fitting
13 Cord
14 Warning device

## Claims

1. A marine hose, comprising: an airbag device;
the airbag device comprising
a water pressure sensor,
a bag float attached in a folded state to an outer surface of the marine hose, and
an inflation device that introduces air into the bag float; and
the water pressure sensor activating the inflation device to inflate the bag float in a folded state upon the water pressure sensor detecting that a preset water pressure value has been reached, thereby
preventing sinking of the marine hose by buoyancy provided by the inflated bag float.

2. The marine hose according to claim 1, further comprising:
a cord connecting the bag float in a folded state to the marine hose, wherein a surface of the inflated bag float protrudes above a water surface while the inflated bag float is connected by the cord to the marine hose.

3. The marine hose according to claim 1 or 2, further comprising:
a warning device that issues a warning upon the water pressure sensor detecting that the preset water pressure value has been reached.

4. An airbag device for a marine hose to be attached afterwards to a marine hose, the airbag device comprising:
a water pressure sensor;
a bag float attached in a folded state to an outer surface of the marine hose; and
an inflation device that introduces air into the bag float;
the water pressure sensor activating the inflation device to inflate the bag float in a folded state upon the water pressure sensor detecting that a preset water pressure value has been reached, thereby preventing sinking of the marine hose by buoyancy provided by the inflated bag float.

5. The airbag device for a marine hose according to claim 4, further comprising
a cord connecting the bag float in a folded state to the marine hose,
wherein a surface of the inflated bag float protrudes above a water surface while the inflated bag float is connected by the cord to the marine hose.

6. The airbag device for a marine hose according to claim 4 or 5, further comprising:
a warning device that issues a warning upon the water pressure sensor detecting that the preset water pressure value has been reached.
